Europäisches Patentamt

European Patent Office

Office européen des brevets

(11) Numéro de publication: **0 156 666**
**B1**

(12) **FASCICULE DE BREVET EUROPEEN**

(45) Date de publication du fascicule du brevet:
**22.04.87**

(21) Numéro de dépôt: **85400238.3**

(22) Date de dépôt: **13.02.85**

(51) Int. Cl.⁴: **B 60 T 8/18**

(54) **Correcteur de freinage perfectionné.**

(30) Priorité: **22.02.84 FR 8402653**

(43) Date de publication de la demande:
**02.10.85 Bulletin 85/40**

(45) Mention de la délivrance du brevet:
**22.04.87 Bulletin 87/17**

(84) Etats contractants désignés:
**DE GB IT**

(56) Documents cités:
**EP - A - 0 033 690**
**FR - A - 2 383 048**
**GB - A - 2 097 080**

(73) Titulaire: **BENDIX France, 126, rue de Stalingrad,**
**F-93700 Drancy (FR)**

(72) Inventeur: **Perrin, Alain, Résidence Arthur**
**Rimbaud 10, rue de la République, F-93000 Bobigny (FR)**

(74) Mandataire: **Timoney, Ian Charles Craig et al, Service**
**Brevets Bendix 44, rue François 1er, F-75008 Paris (FR)**

ACTORUM AG

## Description

La présente invention concerne un perfectionnement aux correcteurs de freinage pour véhicules automobiles, et plus particulièrement aux correcteurs du type comportant un boîtier pourvu d'un alésage, un piston simple ou différentiel coulissant dans ledit alésage et y délimitant une première et une seconde chambre de pression susceptibles d'être reliées à une source de fluide sous pression et à l'un des circuits de freinage du véhicule, respectivement, lesdites chambres communiquant entre elles par l'intermédiaire d'un passage ménagé dans ledit piston, une soupape montée dans ledit passage et élastiquement sollicitée en appui étanche contre un siège formé sur le piston, et un ressort de rappel interposé entre un élément mobile dont la position varie en fonction de la charge du véhicule et ledit piston de manière à solliciter ce dernier vers le fond de la seconde chambre, dans une position de repos pour laquelle ladite soupape se trouve écartée de son siège par une butée solidaire du boîtier.

Un tel correcteur de freinage, plus particulièrement conçu comme «compensateur», est notamment décrit, et son rôle ainsi que son mode de fonctionnement expliqués, dans la demande de brevet d'invention français N° 77 07 361 déposée le 11 mars 1977 par la demanderesse (FR-A-2 383 048).

Dans un correcteur du genre sus-mentionné, il est souhaitable, pour obtenir un fonctionnement correct des freins lors de la mise sous pression du fluide d'actionnement, de disposer d'une assez grande ouverture de la soupape, c'est-à-dire d'un écartement suffisant de cette soupape (le plus souvent constituée par une bille) par rapport à son siège en position de repos du piston. Ceci signifie que soit prévue une course suffisante du piston entre le point où la bille entre en contact avec la butée et commence par conséquent à décoller de son siège, et celui où, sous l'effet de la poussée du ressort de rappel, le piston vient lui-même en butée contre le fond de l'alésage. Cette course du piston se retrouve, en position de repos, dans l'intervalle ménagé entre l'extrémité opposée du piston et l'élément mobile positionné en fonction de la charge du véhicule, ceci du moins pour la valeur maximale de cet intervalle qui correspond aux plus faibles charges prévisibles. Il en résulte en ce dernier cas que, lors de la mise sous pression du fluide de freinage, le piston repoussé par la pression qui s'exerce sur lui parcourt presque instantanément ledit intervalle en comprimant le faible ressort de rappel qui lui est associé, et provoque lors de son entrée en contact avec ledit élément mobile un bruit de cognement dont l'effet peut être désagréablement ressenti par le conducteur du véhicule.

La présente invention se donne pour but de corriger ce défaut, et elle propose à cet effet que, dans un correcteur de freinage du type rappelé ci-dessus, soit prévu un dispositif élastique de limitation de course du piston vers sa position de repos, ce dispositif n'entrant en action qu'après décollement de la soupape par rapport à son siège et modulant ensuite leur écartement en fonction de la poussée exercée sur le piston par l'élément mobile représentatif de la charge du véhicule et par le ressort de rappel interposé entre ledit élément et le piston.

Dans une forme préférentielle de réalisation de l'invention, ledit dispositif élastique est porté par le piston à son extrémité regardant le fond de l'alésage et se compose d'un ressort de compression monté avec précontrainte entre un épaulement fixe du piston et une cuvette mobile axialement entre deux butées formées sur le piston, la face externe de cette cuvette n'entrant en contact avec le fond de l'alésage qu'après décollement de la soupape par rapport à son siège.

On obtient ainsi une limitation automatique de la course du piston en fonction de la charge du véhicule, l'écartement de la soupape par rapport à son siège étant sans inconvénient réduit lorsque le véhicule est faiblement chargé (une réponse peu rapide des freins arrière peut alors être facilement tolérée), et le moindre intervalle qui en résulte entre l'extrémité libre du piston en position de repos et l'élément mobile représentatif de la charge du véhicule minimisant alors le cognement qui peut se produire lors de la mise sous pression du fluide de freinage. Lorsqu'au contraire le véhicule est lourdement chargé, l'élément mobile représentatif de cette charge se rapproche de l'extrémité libre du piston et provoque l'enfoncement de ce dernier vers le fond de l'alésage, ceci en comprimant le ressort précontraint du dispositif de l'invention et en accroissant l'écartement de la soupape par rapport à son siège pour donner à la réponse des freins arrière toute la rapidité désirable.

Les caractéristiques et avantages de l'invention apparaîtront plus clairement à la lecture de la description suivante d'une forme préférentielle de réalisation appliquée au cas d'un compensateur de freinage, donnée à simple titre d'exemple illustratif et en se référant aux dessins ci-annexés, en lesquels:

— la Fig. 1 illustre en élévation et coupe partielle un compensateur de freinage équipé du dispositif de l'invention, et représenté en position d'actionnement des freins, et

— la Fig. 2 montre en coupe à plus grande échelle et de façon schématique le dispositif élastique de limitation de course du piston utilisé sur le compensateur de freinage de la Fig. 1.

Le compensateur de freinage 10 représenté sur les dessins comporte, de façon connue, un boîtier 12 pourvu d'un alésage à gradin 14 dans lequel est reçu en coulissement étanche un piston différentiel 16. Celui-ci divise la cavité intérieure de l'alésage en une première chambre de pression dite d'entrée 18, qui est adjacente à la face de petite section du piston 16 et peut être reliée à une source de fluide sous pression telle qu'un maître-cylindre hydraulique de freinage de type tandem (non représenté), et en une seconde chambre de pression dite de sortie 20, qui est adjacente à la face de grande section du piston 16 et peut être reliée à l'un des circuits de freinage du véhicule, en l'occurrence le circuit desservant les freins de roues arrière (non représenté). Les chambres 18 et 20 communiquent entre elles par l'intermédiaire d'un passage 22 ménagé dans le piston 16, cette communication étant contrôlée par une soupape constituée par une bille 24 élastiquement sollicitée en appui étanche contre un siège 26 solidaire du piston par un léger ressort 28 comprimé dans le passage 22. Au repos, et ainsi qu'il sera expliqué ci-après, le piston 16 est repoussé élastiquement vers le fond 15 de l'alésage 14 et la bille 24 se trouve alors écartée de son siège 26 par une butée 30 solidaire du boîtier, maintenant ainsi ouverte la communication entre les chambres 18 et 20.

L'extrémité libre 17 du piston 18, opposée à celle portant le siège de soupape 26, fait face à un poussoir 32 solidaire d'un levier monté pivotant sur le boîtier 12, levier dont la position angulaire est fonction de la charge supportée par l'essieu arrière du véhicule; plus cette charge est importante, plus le levier 34, rendu solidaire de la suspension par l'intermédiaire d'un système élastique non représenté, s'abaisse rapprochant ainsi le poussoir 32 de l'extrémité libre 17 du piston 16. Entre poussoir et piston est enfin interposé un ressort de compression 36 qui joue le rôle de ressort de rappel et tend, en l'absence d'autre sollicitation, à repousser le piston 16 vers le fond 15 de l'alésage, la force de ce ressort déterminant ainsi qu'il est bien connu la position du point d'intervention du compensateur sur la caractéristique de freinage du véhicule.

Au repos, c'est-à-dire en l'absence de pressurisation du fluide hydraulique, le piston 16 est repoussé ainsi qu'il vient d'être dit par le ressort de rappel 36 vers le fond 15 de l'alésage 14, la bille 24 est alors écartée par la butée 30 du siège de soupape 26, et l'extrémité libre 17 du piston se trouve séparée du poussoir 32 du levier pivotant par un certain intervalle dont la largeur, elle-même fonction de la charge du véhicule, est au plus égale (lorsque le véhicule est à vide) à l'écartement entre bille 24 et siège 26, ou encore à la course maximale $D$ du piston 16 entre le point où la bille décolle de son siège et celui où le piston entre en contact avec le fond 15 de l'alésage. La pression régnant dans les chambres 18 et 20 est alors la même, soit pratiquement nulle, et les freins du véhicule ne sont pas actionnés. Lorsque le conducteur du véhicule désire serrer les freins, la montée en pression du fluide s'effectue simultanément dans les deux chambres jusqu'au moment où la résultante des poussées inégales qui s'exercent sur le piston différentiel devient suffisante pour vaincre la force du ressort de rappel 36, et éventuellement la force élastique qui maintient abaissé le levier pivotant 34, provoquant ainsi le soulèvement du piston 16 (et éventuellement celui du levier 34) jusqu'à ce que le siège de soupape 26 revienne en contact avec la bille 24 (position de fonctionnement correspondant à la représentation des dessins). A partir de cet instant, la poursuite de la montée en pression du fluide contenu dans la chambre d'entrée 18 entraîne une succession d'opérations d'ouverture/fermeture de la soupape 24, 26, en sorte que la montée en pression du fluide contenu dans la chambre de sortie 20 et donc dans le circuit de freinage des roues arrière du véhicule s'effectue avec une pente d'accroissement réduite. Lorsque le conducteur relâche la pédale de frein, la pression dans la chambre 18 retombe et la pression différentielle qui s'exerce sur la bille 24 change de sens, provoquant l'ouverture de la soupape et l'égalisation des pressions dans les deux chambres ainsi que le retour du piston vers sa position de repos. La valeur de la pression d'entrée qui provoque la première manœuvre de fermeture de la soupape lors d'une opération de serrage des freins, ou «point d'intervention» du compensateur qui marque l'infléchissement de la pente de la courbe de pression de sortie, dépend naturellement des caractéristiques constructives du piston 16 ainsi que de la force du ressort de rappel 36; elle est en outre influencée par la position du levier pivotant 34, c'est-à-dire par la charge du véhicule, ainsi qu'il est bien connu des spécialistes du freinage automobile.

On sait également qu'il est souhaitable, pour obtenir une réponse rapide des freins, de disposer d'une ouverture franche de la soupape en position de repos, c'est-à-dire d'un écartement notable entre bille 24 et siège 26. Or cet écartement se retrouve, comme indiqué ci-dessus, entre l'extrémité libre 17 du piston 16 et le poussoir 32 du levier 34, ceci du moins dans le cas d'un véhicule à vide ou peu chargé. En pareil cas, le piston parcourt rapidement la distance correspondant à la compensation de cet intervalle à chaque manœuvre de serrage des freins, et il peut en résulter lors de l'entrée en contact avec le poussoir un «cognement» désagréable pour les occupants du véhicule.

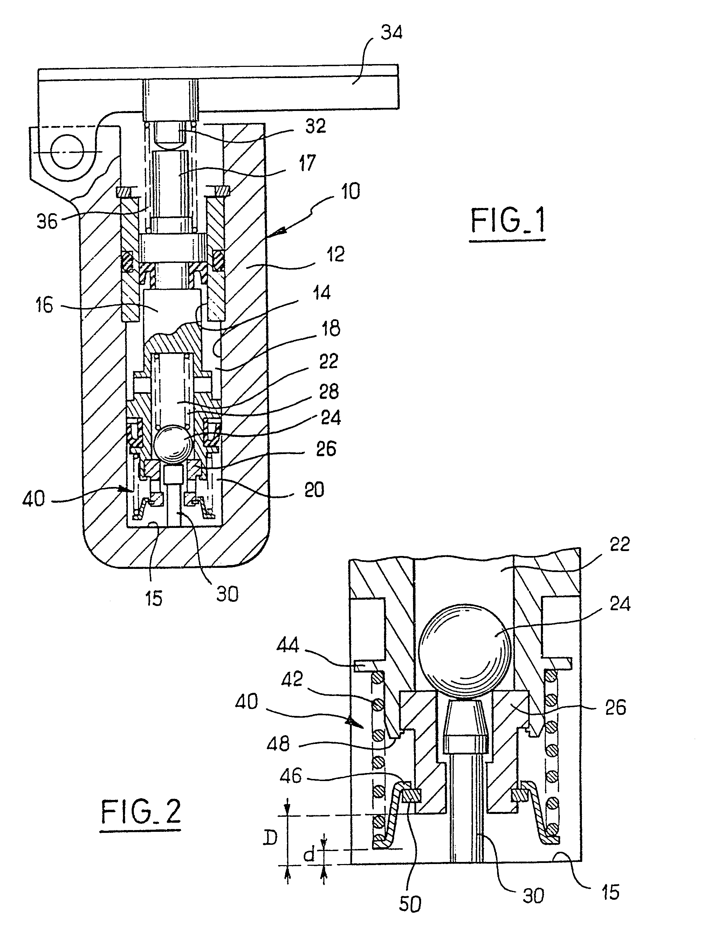

C'est pour remédier à cet inconvénient que l'invention propose de munir le compensateur d'un dispositif élastique 40 de limitation de course du piston vers sa position de repos, dispositif dont une forme de réalisation préférentielle est illustrée à la Fig. 2 des dessins. Il se compose essentiellement d'un ressort de compression 42 monté avec précontrainte entre, d'une part, un épaulement fixe 44 formé à proximité de l'extrémité du piston 16 regardant le fond 15 de l'alésage, et d'autre part, une cuvette 46 mobile axialement entre une butée 48 constituée par l'extrémité du piston proprement dit et un jonc d'arrêt 50 porté par le siège de soupape 26 lui-même solidaire du piston. La forme de la cuvette 46 est telle que, lorsque le piston 16 occupe sa position de fermeture de la soupape, la face externe de cette cuvette ne soit qu'à une distance $d$, très inférieure à la course maximale possible $D$ du piston, du fond 15 de l'alésage; pour parcourir cette course maximale $D$, il faut donc que la poussée exercée sur le piston soit suffisante pour faire reculer la cuvette 46 en comprimant le ressort 42, dont la force doit être choisie supérieure à celle développée par le ressort de rappel 36 dans sa position d'élongation maximale correspondant aux plus faibles charges du véhicule. Il en résulte que, dans le cas d'un véhicule peu ou pas chargé, le piston 16 ne reculera que de la valeur $d$ lors de son retour à la position de repos consécutif à une manœuvre de freinage; l'intervalle entre l'extrémité libre 17 du piston et le poussoir associé 32 sera donc lui-même limité à la valeur d, évitant ainsi un cognement intempestif lors d'une opération de freinage ultérieure; en contrepartie ne sera obtenu qu'un moindre écartement entre la bille 24 et son siège 26, mais on sait qu'en pareil cas une réponse rapide des freins arrière du véhicule est de peu d'importance. Lorsque, par contre, le véhicule est soumis à une charge notable, l'abaissement du levier 34 et la compression du ressort de rappel 36 provoquent une compression plus ou moins prononcée du ressort 42 et partant, un recul accru du piston 16 qui pourra, à la limite de charge admissible, atteindre la valeur D correspondant à l'entrée en contact du siège de soupape 26 avec le fond 15 de l'alésage; on retrouve bien, en pareil cas, toute l'ouverture souhaitable de la soupape sans que réapparaisse pour autant le risque d'un cognement lors d'une nouvelle manœuvre de freinage, puisqu'en pareil cas l'intervalle entre poussoir et piston est de toute façon réduit, voire nul. Le dispositif élastique de l'invention, qui n'entre en action qu'une fois la soupape décollée de son siège par le retour du piston vers sa position de repos et qui n'influence par conséquent en aucune manière le fonctionnement du compensateur au cours des manœuvres de freinage, a ainsi pour effet de moduler le recul du piston en fonction de la charge effective du véhicule; il permet de la sorte d'éliminer l'inconvénient signalé plus haut sans remettre en cause les performances attendues du compensateur.

Bien que l'invention soit décrite ci-dessus dans le cas particulier d'application à un compensateur de freinage, il doit être entendu qu'elle peut pareillement s'appliquer en procurant les mêmes avantages au cas d'un limiteur de pression équipé d'un piston simple, en sorte que son domaine d'emploi recouvre les correcteurs de freinage au sens large du terme.

## Revendications

1. Correcteur de freinage interposable entre une source de pression hydraulique et un circuit de freinage de véhicule automobile, du type comportant un boîtier (12) pourvu d'un alésage (14), un piston simple ou différentiel (16) coulissant dans ledit alésage (14) et y délimitant une première (18) et une seconde (20) chambre de pression susceptibles d'être reliées à la source de pression et au circuit de freinage, respectivement, lesdites chambres (18, 20) communiquant entre elles par l'intermédiaire d'un passage (22) ménagé dans ledit piston (16), une soupape (24) montée dans ledit passage (22) et élastiquement sollicitée en appui étanche contre un siège (26) formé sur le piston (16), et un ressort de rappel (36) interposé entre un élément mobile (32, 34) dont la position varie en fonction de la charge du véhicule et ledit piston (16) de manière à solliciter ce dernier vers le fond de la seconde chambre (20), dans une position de repos pour laquelle ladite soupape (24) se trouve écartée de son siège (26) par une butée (30) solidaire du boîtier (12), caractérisé par le fait qu'est prévu un dispositif élastique (40) de limitation de course de piston (16) vers sa position de repos, ce dispositif élastique n'entrant en action qu'après décollement de la soupape (24) par rapport à son siège (26) et modulant ensuite leur écartement en fonction de la poussée exercée sur le piston (16) par l'élément mobile (32, 34) représentatif de la charge du véhicule et par le ressort de rappel (36) interposé entre ledit élément mobile et le piston.

2. Correcteur de freinage selon la revendication 1, caractérisé par le fait que ledit dispositif élastique (40) est porté par le piston (16) à son extrémité regardant le fond de l'alésage (15) et se compose d'un ressort de compression (42) monté avec précontrainte entre un épaulement fixe (44) du piston et une cuvette (46) mobile axialement entre deux butées (48, 50) formées sur le piston, la face externe de cette cuvette n'entrant en contact avec le fond de l'alésage qu'après décollement de la soupape (24) par rapport à son siège (26).

3. Correcteur de freinage selon la revendication 2, caractérisé par le fait que la force du ressort précontraint (42) est supérieure à celle du ressort de rappel (36) dans sa position d'élongation maximale correspondant aux plus faibles charges du véhicule.

## Patentansprüche

1. Bremsregler, der zwischen eine hydraulische Druckquelle und einen Kraftfahrzeug-Bremskreis einsetzbar ist, mit einem Gehäuse (12), das mit einer Bohrung (14) versehen ist, einem Einfach- oder Stufenkolben (16), der in der Bohrung (14) gleitet und dort eine erste (18) und eine zweite (20) Druckkammer begrenzt, die mit der Druckquelle bzw. dem Bremskreis verbindbar ist, wobei die Kammern (18, 20) untereinander durch einen Kanal (2) im Kolben (16) verbunden sind, einem Schliesskörper (24), der in dem Kanal (22) angeordnet ist und gegen einen Sitz (26) am Kolben (16) elastisch und abgedichtet angedrückt wird, und einer Rückholfeder (36), die zwischen ein bewegliches Teil (32, 34), dessen Stellung von der Fahrzeugbeladung abhängt, und den Kolben (16) so eingesetzt ist, dass sie den letzteren in Richtung auf den Boden der zweiten Kammer (20) in eine Ruhestellung vorspannt, in der der Schliesskörper (24) durch einen am Gehäuse (12) festgelegten Anschlag (30) von seinem Sitz (26) beabstandet ist, dadurch gekennzeichnet, dass eine elastische Vorrichtung (40) vorgesehen ist, die die Bewegung des Kolbens (16) in Richtung auf seine Ruhestellung begrenzt, wobei die elastische Vorrichtung erst wirksam wird, wenn sich der Schliesskörper (24) von seinem Sitz (26) abgehoben hat, und anschliessend seine Abhebebewegung in Abhängigkeit von der Kraft regelt, die auf den Kolben (16) durch das die Fahrzeugbeladung darstellende bewegliche Teil (32, 34) und die zwischen das bewegliche Teil und den Kolben eingesetzte Rückholfeder (36) ausgeübt wird.

2. Bremsregler nach Anspruch 1, dadurch gekennzeichnet, dass die elastische Vorrichtung (40) von dem Kolben (16) an seinem dem Boden der Bohrung (15) zugewandten Ende getragen wird und sich zusammensetzt aus einer Druckfeder (42), die mit Vorspannung zwischen eine festgelegte Schulter (44) des Kolbens und ein becherförmiges Teil (46) montiert ist, welches zwischen zwei am Kolben gebildeten Anschlägen (48, 50) axial beweglich ist, wobei die Aussenseite des becherförmigen Teils mit dem Boden der Bohrung erst in Berührung tritt, wenn sich der Schliesskörper (24) von seinem Sitz (26) abgehoben hat.

3. Bremsregler nach Anspruch 2, dadurch gekennzeichnet, dass die Kraft der Druckfeder (42) grösser ist als die der Rückholfeder (36) in der maximal ausgefahrenen Stellung, die der kleinsten Fahrzeugbeladung entspricht.

## Claims

1. Brake regulator adapted to be interposed between a hydraulic pressure source and an automotive vehicle brake circuit, of the type comprising a casing (12) provided with a bore (14), a simple or differential piston (16) sliding in said bore (14) and delimiting first (18) and second (20) pressure chambers adapted to be connected to the pressure source and the brake circuit, respectively, said chambers (18, 20) communicating with each other via a passage (22) provided in said piston (16), a valve (24) mounted in said passage (22) and resiliently urged, in fluid-tight manner, against a seat (26) formed on the piston (16), and a return spring (36) interposed between a movable member (32, 34), the position of which varies in response to the vehicle load, and said piston (16) such as to urge the latter towards the bottom of the second chamber (20) into a rest position wherein said valve (24) is spaced from its seat (26) by an abutment (30) fixed to the casing (12), characterized in that there is provided a resilient device (40) for limiting movement of the piston (16) towards its rest position, said resilient device being active only after disengagement of the valve (24) relative to its seat (26) and modulating thereafter their spacing in response to the force exerted on the piston (16) by the movable element (32, 34) representing the vehicle load and by the return spring (36) interposed between said movable element and the piston.

2. Brake regulator according to claim 1, characterized in that said resilient device (40) is supported by the piston (16) at its end facing the bottom of the bore (15) and is comprised of a compression spring (42) mounted under bias between a fixed shoulder (44) of the piston and a cup (46) axially movable between two abutments (48, 50) formed on the piston, the external face of said cup moving into contact with the bottom of the bore only after disengagement of the valve (24) relative to its seat (26).

3. Brake regulator according to claim 2, characterized in that the force of the compression spring (42) is superior to that of the return spring (36) in its position of maximum extension corresponding to the minimum loads of the vehicle.

FIG_1

FIG_2